# EUROPEAN PATENT APPLICATION

(11) **EP 1 729 215 A1**
(43) Date of publication of application: **06.12.2006**
(21) Application number: 06011187.9
(22) Date of filing: 31.05.2006
(51) Int. Cl.: G06F 9/445

(54) **A low area architecture for programming embedded flash memory in a microcontroller**

(30) Priority: 31.05.2005 EP 05011710
(71) Applicant: STMicroelectronics S.r.l., 20041 Agrate Brianza (Milano) (IT)
(72) Inventor: Critelli, Rosalino, 95045 Misterbianco (Catania) (IT); Adamo, Santi Carlo, 95030 Gravina di Catania (IT); Inglese, Alessandro, 95037 S.G. La Punta (Catania) (IT); Catalano, Stefano, 95123 Catania (IT); Gangi, Edmondo, 95030 S. Agata Li Battiati (Catania) (IT)
(74) Representative: Ferrari, Barbara

(57) **Abstract**

The present invention relates to a low area architecture for embedded programming flash memory portions in microcontrollers through the substitution of the ROM/RAM/CORE functionality with a digital ISP controller implemented in a Finite State Machine and a I2C standard peripheral. More in particular the invention provides that, after connecting ports of an embedded flash memory and releasing RESET pin, the microcontroller enters in a particular working modality and it is managed by the digital ISP controller instead of the CORE.
According to the invention, a ROM is not required to set up the microcontroller and in consequence the transferring of the boot program from ROM to RAM is not requested for subsequent execution. The patent proposal shows an architecture for embedded flash programming that substitute the ROM through a digital controller able to work with standard protocol link and without creating internal switch noise switching off the CORE during programming phase.

## Description

### Field of application

This invention relates to a low area architecture for embedded flash programming memories in microcontrollers.

More in particular, but not exclusively, the invention relates to a low area architecture for programming a flash memory embedded in microcontrollers comprising a microcontroller core, an embedded flash memory portion, an input/output port and an interface between said core and said memory portion

The following description relates to this specific field of application with the only purpose to make the illustration easier to understand.

### Background of the invention

As it is well known in this technical field, microcontrollers with embedded flash memories are widely used today in all applications from home appliances to automotive.

The embedded flash memory is very useful in system programming which means that the application developer can update program code inside the embedded flash in the microcontroller without removing it from the board through a serial link connection with the programmer (i.e. the PC). In this way the application developer can modify quickly the application program until it works properly.

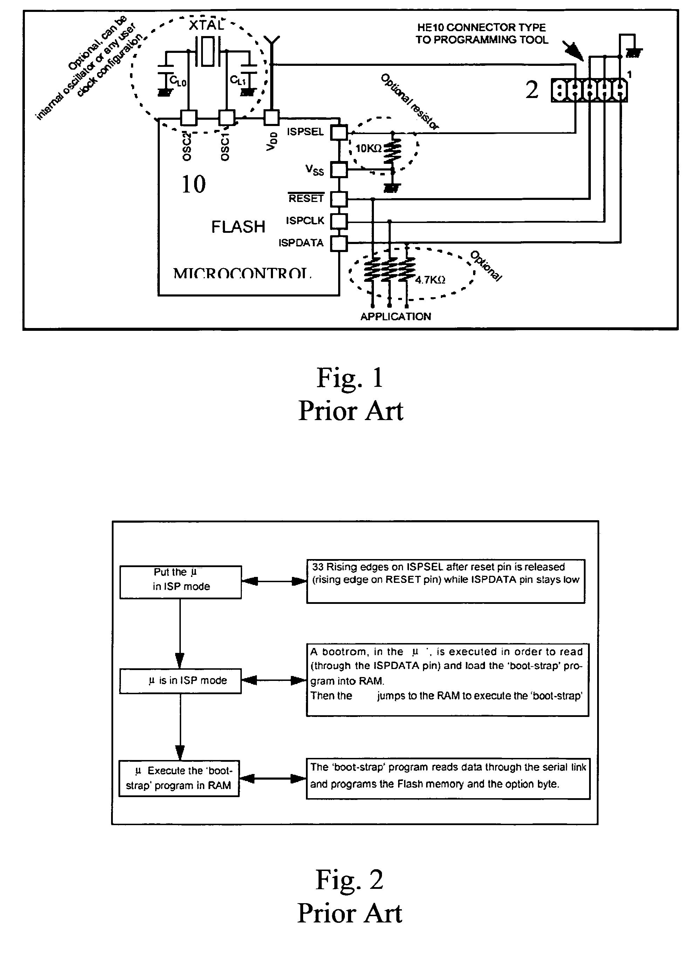

In Figure 1 a micro with an embedded flash memory is represented with 10; six pins are indicated on the right side of the microcontroller and identified as VDD, IPSEL, VSS, RESET, ISPCLK, ISPDATA. Those pins are used to connect the microcontroller with a programming system through the port connection indicated with 2.

Even if not explicitly shown in Figure 1, the system generally include a RAM, a ROM, a Flash and a CORE. In this kind of microcontroller architecture, the ROM is used to contain a boot program but it can generally be directly included in a reserved part of a flash memory portion. The program stored in ROM is previously written by the device manufacturer.

Through the above mentioned six pins, the microcontroller embedded flash memory can be programmed: the boot program stored in the ROM is used to configure the ports of the system during start-up phase and to load the RAM memory.

When the microcontroller is powered on, before using it for any applications, user needs to program the embedded flash memory with program codes, which allows to the microcontroller to work according to the needs.

In particular, after connecting the ports as shown in Figure 1, the programmer begins a procedure, after the RESET pin is released, to put the microcontroller in an ISP mode. With "ISP mode" is indicated a programming phase of the microcontroller.

When in ISP mode, the microcontroller executes the boot program located in the embedded ROM in order to configure the I/O port of the serial link (ISPDATA, ISPCLK) and to load the bootstrap program in the RAM.

Then the microcontroller CORE fetches, decodes and executes the bootstrap program code from RAM and reads data through the serial link to program flash memory.

Figure 2 is a schematic view of a diagram block describing the transition state of the microcontroller during the start up phase: in particular, to put the microcontroller in the ISP mode the two pins IPSEL and ISPDATA must be configured.

When the microcontroller is in the ISP mode the boot ROM is executed through the ISPDATA in order to read and load the boot-strap program in the RAM. Then the control jumps to the RAM to execute the boot-strap program. The boot-strap program reads data through the serial link and programs the Flash memory and the option bytes.

As previously mentioned, in this system architecture the CORE is switched on to fetch, decode and execute bootstrap program from RAM and a dedicated not standard serial link/protocol interface is needed for this matter.

For example, in the prior art document "Atmega32: 8-bit AVR Microcontroller with 32K Bytes In-System Programmable Flash", in the name of Atmel Corporation, at page 218, a block diagram representing a device architecture is schematically represented.

The device comprises input/output ports and four additional pins, TDI, TDO, TCK, TMS, linked to a TAP controller that is in communication with a core.

According to this solution the core is involved both in normal mode execution and in programming mode execution. In this way, it is not possible to use the core in normal mode execution, as instance for executing code on a first memory, while the TAP controller is executing in programming mode, for example on second memory or on an additional device.

This is a drawback fur the system performances.

The underlying technical problem of the present invention is to simplify the described embedded flash memory programming system. More particularly the aim is to reduce the configuration complexity of the start-up phase due to the need of interfacing the microcontroller with the embedded memory portions, for reading the ROM, for transferring the boot program in RAM and for the subsequent execution of the program.

Another aim of the present invention is that of providing an architecture for embedded flash programming not based on a ROM and structured to at least reduce internal switch noise when switching off the CORE during programming phase and to reduce flash memory programming time avoiding downloading code in RAM through boot ROM execution.

### Summary of the invention

According to one embodiment of the present invention the system architecture is free from ROM to improve not only the performance but also for solving the testing problems related to ROM and to achieve a system full scan testable.

Also the manufacturer doesn't need to previously store a boot program in ROM or in a dedicated part of the Flash.

According to a more specific aspect of the invention, a standard serial link protocol is used to interface the microcontroller instead of a non standard protocol as it will be clear in the following more detailed description.

The features and advantages of the invention will be apparent from the following description of an embodiment thereof, given by way of non-limitative example with reference to the accompanying drawings.

### Brief description of the drawings

Figure 1 represents in a schematic view a microcontroller with embedded flash memory and a series of pins used for programming the flash memory according to the prior art technique.
Figure 2 represents a block diagram describing the microcontroller core fetch, decoding and execution phases according to the prior art.
Figure 3 represents a block diagram describing the digital ISP controller command according to the architecture of the present invention.
Figure 4 represents the ISP controller decoding commands according to the architecture of the present invention.

### Detailed description

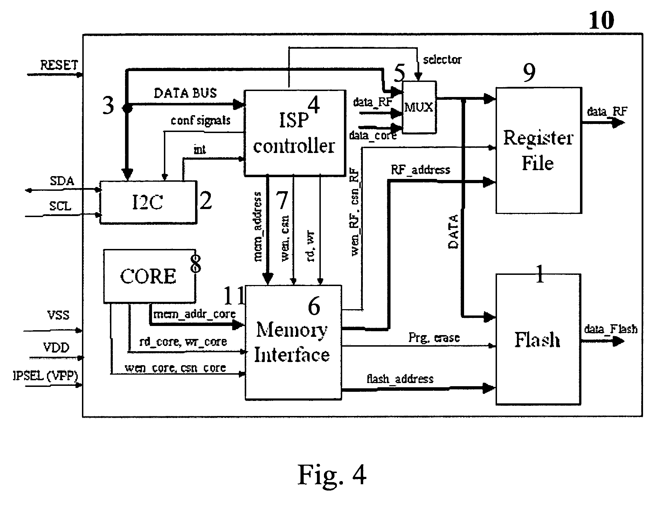

Shown in Figure 4 is globally and schematically shown a microcontroller 10 with an embedded flash memory 1.

The invention provides a simplified architecture for embedded flash programming that substitutes the ROM functionality through a digital ISP controller able to work with standard protocol link and without creating internal switch noise switching off the microcontroller core during programming phase.

More in particular on the left side of Figure 4, six pins are indicated: RESET, SDA, SCL, VSS, VDD, IPSEL. Two of these pins are connected directly with the I2C serial interface indicated with 2 which is a peripheral already embedded into the device for normal mode operation.

The I2C peripheral is connected through the DATA_BUS 3 to the ISP controller 4 and to a multiplexer MUX indicated with 5. The memory interface 6 is connected to the ISP controller 4 through a mem_address line connection 7 and to the CORE 8 through a mem_addr_core line connection 11.

According to the invention, a ROM is not required to set up the microcontroller and, as a consequence, transferring the boot program from ROM to RAM is not requested for subsequent execution.

The register file 9 is connected to the MUX 5 and to the memory interface 6 while the flash memory 1 is connected to the MUX 5 and the memory interface 6.

According to the present invention, after connecting ports as in Figure 1 and releasing RESET pin as known, the microcontroller enters in ISP mode and is managed by the digital ISP controller 4 instead of CORE 8 as happens in normal mode.

The digital ISP controller 4 is a very small Finite State Machine and its contribution to total area and complexity is negligible.

When in ISP mode, the digital ISP controller 4 configures the I/O ports. After that, it manages the standard I2C 2 serial links SDA and SCL and waits for command from programmer.

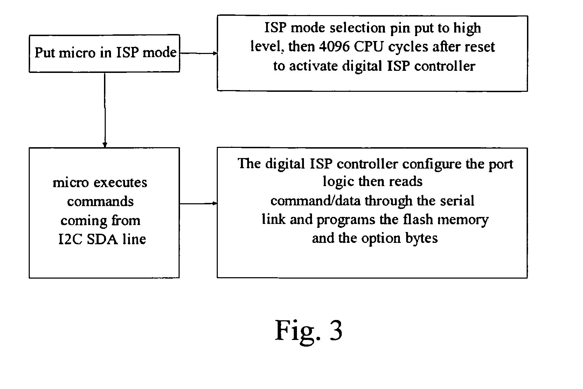

In this way no ROM is needed and no bootstrap program downloaded and executed in RAM by CORE 8. Program code execution by CORE is replaced, in this architecture, with commands execution by the digital ISP controller 4, as shown schematically in figure 3.

In the following table the commands received by the I2C interface 2 and sent to ISP 4 controller through the common DATA_BUS 3 are reported.

**Table 1:**

| **Command** | **Code** | **Description** |
|---|---|---|
| Block Write | 00000001 | First erase block currently pointed, then write the 64 bytes |
| ByteWrite | 00000010 | First erase, then write byte in currently pointed page and offset |
| BlockErase | 00000011 | Erase the block of the provided offset inside the current page |
| ByteErase | 00000100 | Erase the byte with the provided offset inside the current page |
| ByteRead | 00000101 | Read the byte with the provided offset inside the current page |
| FastByteWrite | 00001000 | Like ByteWrite but without erase |
| GlobalErase | 00001001 | Erase all first 32K byte Program memory |
| FastBlkWrite | 00001011 | Like BlockWrite but without erase |
| SetPage | 00001100 | Update page pointer with provided value |
| ReadData | 00001101 | Read the currently pointed byte and update address hy one |
| IncBlk | 00001111 | Update current block pointer by one |
| ReadStatus | 00010011 | Read current Status Register and exit ISP mode |

This table thus reports the commands for the digital ISP controller 4.

Then the ISP controller 4 decodes these commands, sends address (mem_address), data (DATA_BUS) and read/write signals (rd, wr, wen, csn) to memory interface in order to program flash memory and option bytes as shown in Figure 4.

ISP controller 4 provides address and read/write signals for Register file 9 and Memory 6 only in ISP mode while in normal mode they are provided by the CORE 8 (through mem_addr_core, wen_core, csn_core, rd_core and wr_core link).

For this purpose a MUX stage is present inside memory interface to select, depending on the microcontroller mode, if the CORE 8 or ISP controller 4 are generating flash and register file addresses.

If the microcontroller is in ISP mode, the ISP controller 4 generates flash_address directed to Flash memory 1, RF_adrress directed to Register File 9, read/write signals wen_RF and csn_RF also directed to Register File 9 and prg and erase signals directed to Flash Memory 1.

If the microcontroller runs in normal mode the CORE is responsible to generate and address the addresses described above.

The same happens not only for addresses but also for data in the MUX of Figure 4: data can came from the CORE 8 (through data_core) or from ISP controller 4 (DATA_BUS) in ISP mode.

The other input of the MUX is data coming from Register Files that needs to be swapped on flash during BlockWrite command when the ISP controller first loads the 64 bytes on Register Files, then swaps them on flash.

ISP is responsible to manage the MUX selector signal. In conclusion we can see that in ISP mode CORE doesn't need tu fetch, decode and execute a bootstrap program from RAM and so it can be switched off reducing internal noise.

Advantagcously, according to the present invention the ISP controller is independent by the CORE, the low area architecture supporting a contemporary execution of the ISP controller in programming mode and the CORE in normal mode.

Moreover, the ISP controller is connected to a standard input/output port comprising only two pins, so that no additional peripheral intended to be used in programming mode and requiring additional pins are needed.

## Claims

1. A Low area architecture (10) for embedded programming flash memories (1) in microcontrollers comprising a microcontroller core (8), an embedded flash memory portion (1), an input/output serial port (2), comprising two pins, and an interface (6) between said core (8) and said memory portion (1) **characterized by** further comprising a digital ISP controller (4) connected to said input/output serial port (2) and driving said interface (6), said core (8) being independent by said digital ISP controller (4).

2. A low area architecture according to claim 1, wherein said ISP controller (4) is connected to said input/output serial port (2) through a DATA_BUS connection (3) and to said memory interface (6) through a mem_address connection.

3. A low area architecture according to claim 1, wherein said ISP controller (4) is further connected to a multiplexer (5) through a selector for selecting an ISP or a normal mode execution.

4. A low area architecture according to claim 3, wherein said ISP controller (4) is selected in said ISP mode execution or in said normal mode execution when said core (8) is in normal mode execution.

5. A low area architecture according to claim 1, wherein said input/output serial port (2) is connected to a couple of serial pins (SDA, SCL) and it is driven by said ISP controller (4) when the system is in ISP mode.

6. A low area architecture according to claim 1, wherein said ISP controller (4) is a Finite State Machine.

7. A low area architecture according to claim 6, wherein said ISP controller (4) performs internally a programming phase independently from said microcontroller core (8).

8. A low area architecture according to claim 1, wherein the code intended for programming said flash memory portion (1) is decoded by said ISP controller (4) from data coming through said serial interface (2).

9. A low area architecture according to claim 3, wherein the said multiplexer (5) manages so microcontroller core (8) and said ISP controller (4) for generating flash and register file addresses depending on microcontroller mode.
